# EUROPEAN PATENT APPLICATION

(11) **EP 4 752 283 A1**
(43) Date of publication of application: **03.06.2026**
(21) Application number: 25219510.2
(22) Date of filing: 28.11.2025
(51) Int. Cl.: E01H 4/02, E01C 19/00, B60K 35/10, G01C 21/36, E02F 3/84, B60K 35/22, B60K 35/28, B60K 35/81, B60R 1/27

(54) **CRAWLER VEHICLE AND CONTROL METHOD TO CONTROL SAID CRAWLER VEHICLE**

(30) Priority: 29.11.2024 IT 202400027078; 18.12.2024 IT 202400028929; 06.02.2025 IT 202500002259; 11.03.2025 IT 202500004972; 11.04.2025 WO PCT/IB2025/053818; 06.06.2025 IT 202500013255
(71) Applicant: PRINOTH S.p.A., 39049 Vipiteno (BZ) (IT)
(72) Inventor: KIRCHMAIR, Martin, 39049 VIPITENO (BZ) (IT); SALIS, Francesco, 39049 VIPITENO (BZ) (IT); PAOLETTI, Alberto, 39049 VIPITENO (BZ) (IT); THOM, Jamie, 39049 VIPITENO (BZ) (IT)
(74) Representative: Studio Torta S.p.A.

(57) **Abstract**

A crawler vehicle has a frame (2); at least one working tool (5, 6), which is connected to the frame (2) and is configured to perform a processing of a surface to be worked (M); a position sensor (7) configured to detect a plurality of positions of the crawler vehicle (1) on the surface to be worked (M); a control unit (8) configured to reconstruct a trajectory travelled by the crawler vehicle (1) on the surface to be worked (M) as a function of the positions of the crawler vehicle (1) detected by the position sensor (7) and to calculate a reference position to be reached and/or a reference trajectory to be travelled as a function of the positions detected by the position sensor (7) and of the reconstructed trajectory travelled; and a display device (9, 10, 11) configured to reproduce a first visual indicator (12) indicative of the calculated reference position and/or of the calculated reference trajectory.

## Description

### CROSS-REFERENCE TO RELATED APPLICATIONS

This patent application claims priority from Italian patent applications no. 102024000027078 filed on November 29, 2024, no. 102024000028929 filed on December 18, 2024, no. 102025000002259 filed on February 6, 2025, no. 102025000004972 filed on March 11, 2025, from International application no. PCT/IB2025/053818 filed on April 11, 2025, and from Italian patent application no. 102025000013255 filed on June 6, 2025, the entire disclosure of which is incorporated herein by reference.

### TECHNICAL SECTOR

The present invention relates to a crawler vehicle, preferably used for preparing ski runs, and a control method to control said crawler vehicle.

### BACKGROUND OF THE INVENTION

As is known, the crawler type vehicles are commonly used along off-road routes to carry out surface processing, such as a preparing the snowpack of ski runs or a cleaning of beaches or operations in the agricultural field.

Generally, the surface to be worked is worked by advancing the crawler vehicle on the surface to be worked and at the same time operating a working tool carried by the crawler vehicle, such as a snow tiller or a snow shovel or a plough. In practice, the crawler vehicle performs a sequence of round trips along the surface to be worked so as to cover and work with the working tool the entire surface to be worked.

In the sector of agricultural operations, in order to avoid an excessive overlap between two successive passes and at the same time to guarantee the processing of the entire surface to be worked, the known crawler vehicles are equipped with a mechanical tracing device, which is configured to mark a groove along the surface to be worked during the advancement of the crawler vehicle on the surface to be worked so as to keep track of the portion of surface worked and provide an indication of the trajectory to be followed in the following pass to a driver of the crawler vehicle. Typically, the groove marked on the surface to be worked is aligned with the centre of the crawler vehicle when the crawler vehicle makes the next pass in the opposite direction.

In the event that the crawler vehicle is used for the processing of a snowpack, a certain overlap between two successive passes of the working tool is considered the best practice to prepare the surface to be worked in an optimal way, avoiding leaving unworked portions.

However, for drivers with little experience it is sometimes difficult to drive the crawler vehicle on the surface to be worked so as to work the entire surface to be worked and at the same time minimize the overlap area between two successive passes to avoid working the same portion of the surface twice.

### OBJECT OF THE INVENTION

An aim of the present invention is to realize a crawler vehicle that mitigates the drawbacks of the prior art disclosed herein.

In accordance with the present invention a crawler vehicle is realized, preferably for preparing ski runs, the crawler vehicle being configured to advance on a surface to be worked in a travelling direction and comprising:
- a frame extending along a central axis substantially parallel to the travelling direction;
- a pair of motorised tracks;
- a driver's cab mounted on the frame;
- at least one working tool, which is connected to the frame and is configured to perform a processing of the surface to be worked during the advancement of the crawler vehicle on the surface to be worked;
- a position sensor configured to detect a plurality of positions of the crawler vehicle on the surface to be worked during the advancement of the crawler vehicle on the surface to be worked;
- a control unit, which is in communication with the position sensor and is configured to reconstruct a trajectory travelled by the crawler vehicle on the surface to be worked as a function of the positions of the crawler vehicle detected by the position sensor and to calculate a reference position to be reached and/or a reference trajectory to be travelled as a function of the positions detected by the position sensor and of the reconstructed travelled trajectory; and
- a display device, which is in communication with the control unit and is configured to reproduce a first visual indicator indicative of the calculated reference position and/or the calculated reference trajectory.

Thanks to the present invention, it is possible to provide the driver of the crawler vehicle with a simple and intuitive visual indication of the optimal reference position to be reached and/or the optimal reference trajectory to be travelled.

In particular, the control unit is configured to calculate the reference position to be reached and/or the reference trajectory to be travelled so as to guarantee a partial overlap of desired amplitude between two successive passes of the working tool on the surface to be worked.

In practice, it is easy for the driver of the crawler vehicle to cover the entire surface to be worked, while minimizing the overlap area between two successive passes to avoid working the same portion of the surface twice. In this way, it is possible to increase the efficiency of the working operations of the surface to be worked.

In particular, the display device is configured to reproduce a second visual indicator indicative of a current position of the crawler vehicle on the surface to be worked and/or of a trajectory currently travelled by the crawler vehicle on the surface to be worked.

In this way, the driver of the crawler vehicle can view a possible gap between the current position of the crawler vehicle on the surface to be worked and/or the trajectory currently travelled by the crawler vehicle and the reference position to be reached and/or the reference trajectory to be travelled.

In particular, the control unit is configured to calculate the reference position to be reached and/or the reference trajectory to be travelled as a function of an overall dimension of the at least one working tool on the surface to be worked in a direction substantially transverse to the central axis.

In this way, it is possible to control the amplitude of the overlap between two successive passes of the working tool on the surface to be worked, ensuring optimal processing of the surface to be worked.

In particular, the crawler vehicle comprises a detection device, which is in communication with the control unit and is configured to detect operating data comprising operating parameters of the crawler vehicle and/or information on the operations to be performed and/or on the characteristics of the environment surrounding the crawler vehicle; the control unit being configured to calculate the reference position to be reached and/or the reference trajectory to be travelled as a function of the operating data detected by the detection device.

In this way, it is possible to calculate the reference position to be reached and/or the reference trajectory to be travelled taking into account the conformation of the environment surrounding the crawler vehicle and the presence of any obstacles.

In particular, the display device is arranged inside the driver's cab. In more detail, the display device comprises an interface screen configured to display the first visual indicator.

In this way, since the interface screen is arranged inside the driver's cab, in order to reach the reference position and/or follow the reference trajectory, the driver is not forced to look through the windscreen or windows of the driver's cab, which may be dirty or foggy and, consequently, may partially obstruct the driver's view outside the driver's cab.

In particular, the display device is configured to project the first visual indicator onto the surface to be worked. In more detail, the display device comprises a projector configured to project a light beam onto the surface to be worked so as to reproduce the first visual indicator on the surface to be worked.

In this way, the driver of the crawler vehicle can view the reference position and/or the reference trajectory directly on the surface to be worked without the need to look away from the surface to be worked.

A further aim of the present invention is to realize a control method to control a crawler vehicle that mitigates the drawbacks of the prior art disclosed herein.

In accordance with the present invention, a control method to control a crawler vehicle is realized, the control method comprising the steps of:
- advancing the crawler vehicle on a surface to be worked in a travelling direction;
- performing a processing of the surface to be worked by means of at least one working tool during the advancement of the crawler vehicle on the surface to be worked;
- detecting a plurality of positions of the crawler vehicle on the surface to be worked during the advancement of the crawler vehicle on the surface to be worked;
- reconstructing a trajectory travelled by the crawler vehicle on the surface to be worked as a function of the crawler vehicle positions detected;
- calculating a reference position to be reached and/or a reference trajectory to be travelled as a function of the detected positions and of the reconstructed travelled trajectory; and
- reproducing a first visual indicator indicative of the calculated reference position and/or of the calculated reference trajectory.

Thanks to this method, it is possible to provide the driver of the crawler vehicle with a simple and intuitive visual indication of the optimal reference position to be reached and/or the optimal reference trajectory to be travelled in order to increase the efficiency of the working operations of the surface to be worked.

### BRIEF DESCRIPTION OF THE DRAWINGS

Further characteristics and advantages of the present invention will become clear from the following description of non-limiting examples of embodiment thereof, with reference to the figures of the attached drawings, wherein:
- Figure 1 is a view in side elevation, with parts removed for clarity and schematised parts, of a crawler vehicle made in accordance with the present invention;
- Figure 2 is a perspective view, with parts removed for clarity and schematised parts, of a detail of the crawler vehicle in Figure 1; and
- Figures 3-6 are plan views, with parts removed for clarity and schematised parts, of the crawler vehicle of Figure 1 in respective operating configurations.

### DETAILED DESCRIPTION OF THE FIGURES

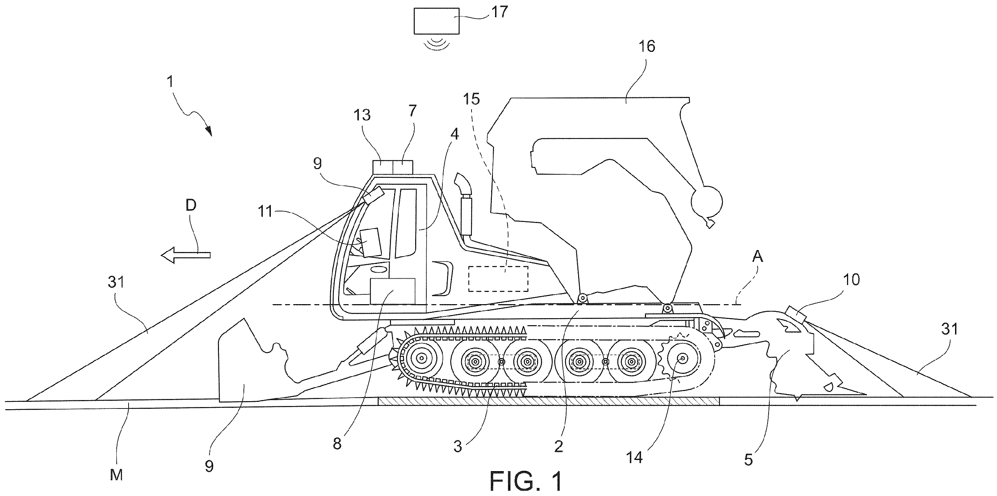

With reference to Figure 1, number 1 denotes as a whole a crawler vehicle, which in the shown case is used for preparing a snowpack of ski runs. In particular, the crawler vehicle 1 is a snow groomer.

In more detail, the crawler vehicle 1 is used for preparing downhill ski runs, and/or cross-country ski runs, and/or ski-jumping ramps, and/or half-pipe ski runs, and/or snow-parks, and/or snowmobile tracks.

In accordance with a further embodiment, the crawler vehicle 1 can be used for the maintenance of sandy areas, such as beaches, or for agricultural operations, such as harvesting and/or handling of agricultural products and/or forage silage and/or bagasse harvesting and/or handling.

In addition, in accordance with a further embodiment not shown in the accompanying figures, the crawler vehicle 1 can comprise a shredder preferably positioned at the front of the crawler vehicle 1 and can be used for shredding vegetation.

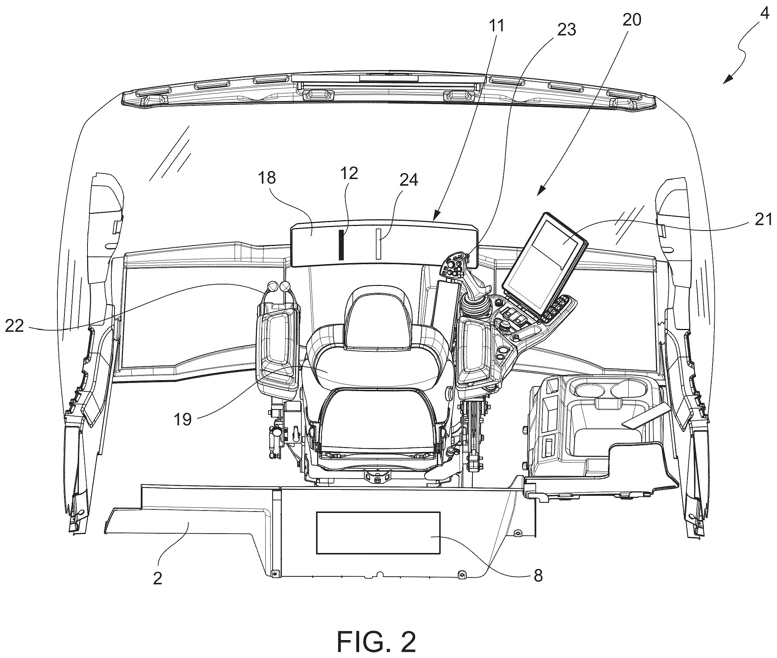

In accordance with the present invention, the crawler vehicle 1 is configured to advance on a surface to be worked M, such as a snowpack, in a travelling direction D and comprises a frame 2 extending along a central axis A substantially parallel to the travelling direction D; a pair of motorised tracks 3 (only one of which is visible in Figure 1); a driver's cab 4 mounted on the frame 2; at least one working tool 5, 6, which is connected to the frame 2 and is configured to perform a processing of the surface to be worked M during the advancement of the crawler vehicle 1 on the surface to be worked M; a position sensor 7 configured to detect a plurality of positions of the crawler vehicle 1 on the surface to be worked M during the advancement of the crawler vehicle 1 on the surface to be worked M; a control unit 8, which is in communication with the position sensor 7 and is configured to reconstruct a trajectory travelled by the crawler vehicle 1 on the surface to be worked M as a function of the positions of the crawler vehicle 1 detected by the position sensor 7 and to calculate a reference position to be reached and/or a reference trajectory to be travelled as a function of the positions detected by the position sensor 7 and the reconstructed trajectory travelled; and a display device 9, 10, 11, which is in communication with the control unit 8 and is configured to reproduce a visual indicator 12 (Figures 2-6) indicative of the calculated reference position and/or of the calculated reference trajectory.

In addition, the crawler vehicle 1 comprises a pair of drive wheels 14 (only one of which is visible in Figure 1), each of which is coupled to a respective motorised track 3; and a propulsion system 15, for example internal combustion or electric or hydrogen-powered, configured to transmit power to the drive wheels 14.

In the non-limiting embodiment of the present invention described and shown herein, the working tool 5 is mounted at the back on the frame 2 and comprises a snow tiller. The working tool 6 is mounted frontally on the frame 2 and comprises a shovel.

It is understood that the crawler vehicle 1 does not necessarily comprise all the working tools 5, 6 mentioned above. For example, the crawler vehicle 1 may comprise one of the working tools 5, 6 or both of the working tools 5 and 6. Furthermore, in the case shown in Figure 1, the crawler vehicle 1 comprises a winch 16 mounted on the frame 2.

In accordance with an alternative embodiment, not shown in the accompanying figures, the working tool 5 can be used for working agricultural fields and can comprise, for example, a plough or a shredder.

In accordance with a further alternative embodiment not shown in the accompanying figures, the working tool 5 and/or the working tool 6 can be used for cleaning sandy areas.

In accordance with one embodiment, the position sensor 7 comprises a satellite navigation device, for example a GNSS ("Global Navigation Satellite System") type device, which is configured to detect in real time the position and three-dimensional orientation of the crawler vehicle 1.

Furthermore, the crawler vehicle 1 comprises a detection device 13, which is in communication with the control unit 8 and is configured to detect operating data comprising operating parameters of the crawler vehicle 1 and/or information on the operations to be performed and/or on the characteristics of the environment surrounding the crawler vehicle 1.

In particular, the detection device 13 comprises a lidar and/or a radar and/or an infrared video camera and/or a stereoscopic camera and/or a camera and/or a video camera preferably at 270° or 360°. By way of example, in the event that the detection device 13 comprises a camera or a video camera, said detection device 13 is configured to respectively detect images or videos of the environment surrounding the crawler vehicle 1.

In accordance with a variant of the present invention, the detection device 13 comprises a thermographic camera configured to acquire thermographic images and/or thermographic videos of the environment surrounding the crawler vehicle 1.

In one embodiment, the detection device 13 comprising a thermographic camera allows one or more of the following to be detected: snow temperature(s); snow humidity; air temperature(s); air humidity; snowpack profile thanks to the temperature difference between snowpack and air; distinguishing a worked surface of snowpack from an unworked surface of snowpack. The use of the thermographic camera is particularly useful in conditions of poor visibility, such as at night or in foggy conditions.

In accordance with embodiments not shown in the accompanying figures, the detection device 13 can be arranged aboard other crawler vehicles or aboard recognition vehicles or aboard an aerial vehicle, preferably unmanned, such as an aerial drone, or arranged in fixed positions on the surface to be worked M and/or at the boundaries of the surface to be worked M.

In accordance with the present invention, the control unit 8 implements artificial intelligence algorithms.

In particular, the control unit 8 is provided with wireless connection capability, for example directly through a local communication network or through a mobile data network and an Internet connection, for connection to a remote monitoring system 17 of a ski resort. In more detail, the remote monitoring system 17 is configured to receive data from the control unit 8, to process said received data, and to monitor and/or control a fleet of crawler vehicles 1 as a function of the processed data. In accordance with an embodiment, the remote monitoring system 17 implements artificial intelligence algorithms.

In particular, the control unit 8 is configured to calculate the reference position to be reached and/or the reference trajectory to be travelled as a function of the operating data detected by the detection device 13.

In more detail, the control unit 8 is configured to process the operating data detected by the detection device 13 and to identify a position and/or a conformation of reference elements in the environment surrounding the crawler vehicle 1 as a function of said processed data.

In particular, the control unit 8 is configured to calculate a distance of each reference element identified by the crawler vehicle 1 as a function of the processed data and to calculate the reference position as a function of said calculated distance.

In addition or alternatively, the control unit 8 is configured to define an area that can be travelled by the crawler vehicle 1 as a function of the position and/or of the identified conformation of the reference elements and to calculate the reference trajectory as a function of the defined area that can be travelled so as to avoid collisions with any reference elements classified as obstacles.

In the case described and shown herein, each of the display devices 9, 10 comprises a respective projector configured to project a light beam onto the surface to be worked M so as to reproduce the visual indicator 12 on the surface to be worked M.

In particular, the display device 9 is facing in the travelling direction D and is configured to project the light beam so as to reproduce the visual indicator 12 on a portion of the surface to be worked M that is in front of the driver's cab 4.

The display device 10 is facing in a direction opposite to the travelling direction D and is configured to project the light beam so as to reproduce the visual indicator 12 on a portion of the surface to be worked M that is behind the crawler vehicle 1.

In addition or alternatively, the display device 11 is arranged inside the driver's cab 4 and comprises an interface screen 18 configured to display the visual indicator 12.

It is understood that the crawler vehicle 1 does not necessarily comprise all the display devices 9, 10, 11 mentioned above. For example, the crawler vehicle 1 may comprise one or two of the display devices 9, 10, 11. By way of example, in accordance with an alternative embodiment, the crawler vehicle 1 comprises the display devices 9 and 10 and is without the display device 11. In accordance with a further alternative embodiment, the crawler vehicle 1 comprises the display device 11 and is without the display devices 9 and 10.

With reference to Figure 2, the crawler vehicle 1 comprises a seat 19 arranged inside the driver's cab 4 preferably in front of the interface screen 18, and a control interface 20, which is in communication with the control unit 8 and is configured to receive commands from the driver of the crawler vehicle 1 and to transmit said commands to the control unit 8. In particular, the control interface 20 is arranged in proximity of the seat 19 so as to be within reach of the driver of the crawler vehicle 1 when said driver is seated on the seat 19.

In the non-limiting embodiment of the present invention described and shown herein, the control interface 20 comprises a control screen 21 provided with a touch sensor configured to detect a touch or a tap, a control lever 22, and a joystick 23.

In practice, the control interface 20 allows the driver to control the movement of the crawler vehicle 1 and the operation of the working tools 5, 6. In particular, the control lever 22 and the joystick 23 are configured to drive the advancement of the crawler vehicle 1 and to control the movements of the working tools 5, 6.

With reference to Figures 2-6, each display device 9, 10, 11 is configured to reproduce a visual indicator 24 indicative of a current position of the crawler vehicle 1 on the surface to be worked M and/or of a trajectory currently travelled by the crawler vehicle 1 on the surface to be worked M.

In particular, each display device 9, 10, 11 is configured to reproduce the visual indicator 24 aligned with the central axis A of the frame 2.

In more detail, each display device 9, 10, 11 is configured to simultaneously reproduce the visual indicators 12 and 24 preferably using different colourings.

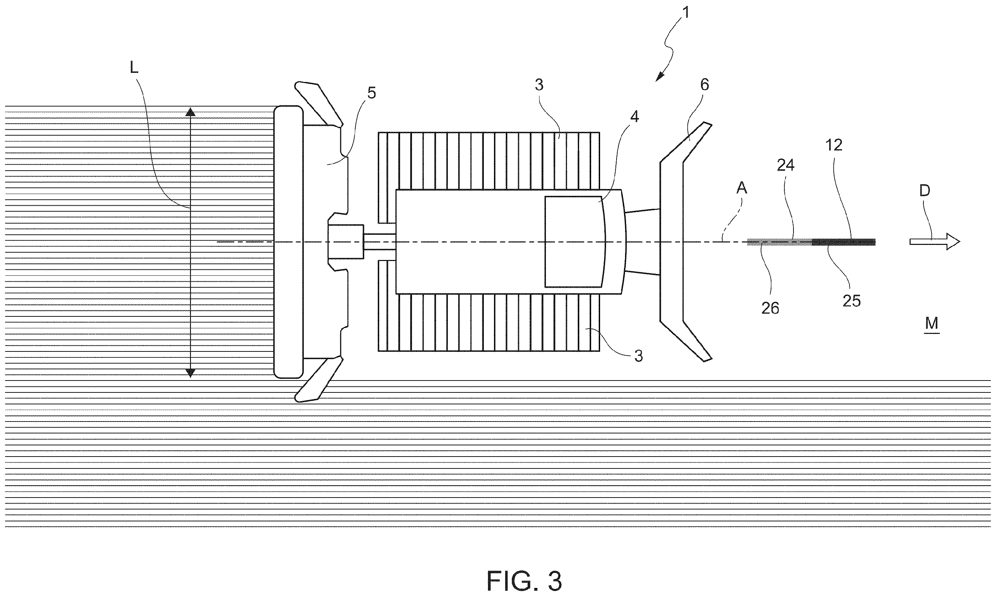

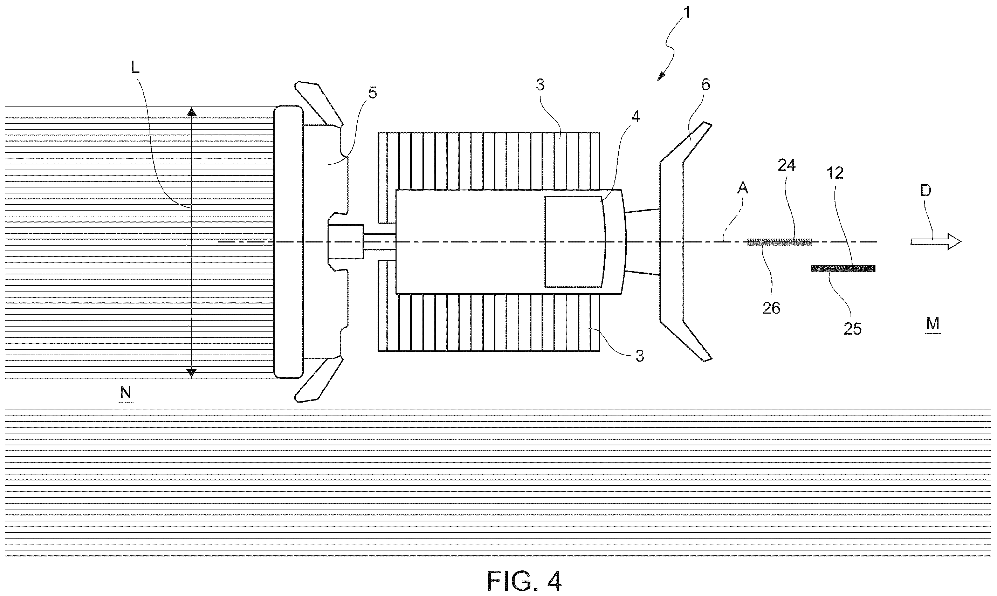

With reference to Figures 3 and 4, the control unit 8 is configured to calculate the reference position to be reached and/or the reference trajectory to be travelled as a function of an overall dimension L of the working tool 5 on the surface to be worked M in a direction substantially transverse to the central axis A.

In use, in the configuration described and shown herein, the crawler vehicle 1 advances in the travelling direction D and the display device 9 projects the light beam so as to reproduce the visual indicator 12 and the visual indicator 24 on a portion of the work surface M that is in front of the driver's cab 4.

In particular, the visual indicator 12 comprises a linear element 25 extending in a direction substantially parallel to the central axis A and the visual indicator 24 comprises a linear element 26 extending in a direction substantially parallel to the central axis A.

In more detail, in the operating configuration of Figure 3, the linear element 25 is aligned with the linear element 26 and the crawler vehicle 1 advances on the surface to be worked M following the reference trajectory. In such a configuration, the crawler vehicle 1 advances without leaving on the surface to be worked M unworked portions between one pass and the other.

In the operating configuration of Figure 4, the linear element 25 is offset with respect to the linear element 26 and the crawler vehicle 1 advances on the surface to be worked M deviating from the reference trajectory. In such a configuration, the crawler vehicle 1 advances leaving on the surface to be worked M an unworked portion N between one pass and the other.

It is understood that, the visual indicators 12 and 24 may comprise visual elements other than the linear elements 25 and 26. By way of example, the visual indicators 12 and 24 may comprise respective dotted visual elements and/or respective dashed visual elements and/or respective curved visual elements and/or respective arrow visual elements.

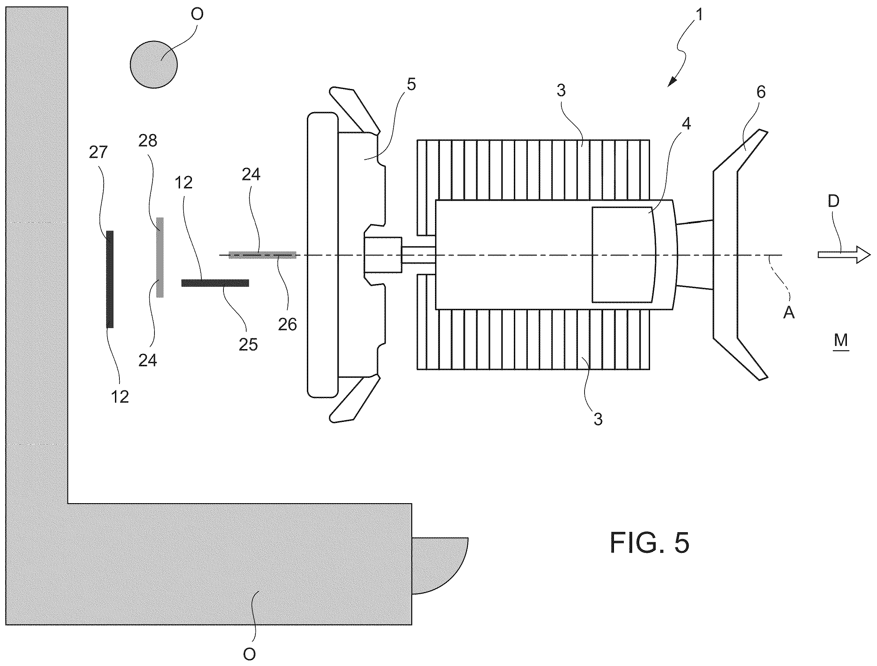

In use and with reference to Figure 5, the crawler vehicle 1 advances in a direction opposite to the travelling direction D, in particular in reverse, and the display device 10 projects the light beam so as to reproduce the visual indicator 12 and the visual indicator 24 on a portion of the surface to be worked M that is behind the crawler vehicle 1.

In particular, the visual indicator 12 comprises a linear element 27 extending in a direction transverse to the central axis A and the visual indicator 24 comprises a linear element 28 extending in a direction transverse to the central axis A.

In the operating configuration described and shown herein, the visual indicator 12 is indicative of the reference position to be reached calculated by the control unit 8. In more detail, the calculated reference position takes into account the obstacles O present on the surface to be worked M and, in particular, corresponds to a stop position for the crawler vehicle 1 calculated to avoid risks of collision with the obstacles O. The visual indicator 24 is indicative of the current position of the crawler vehicle 1 with respect to the calculated reference position.

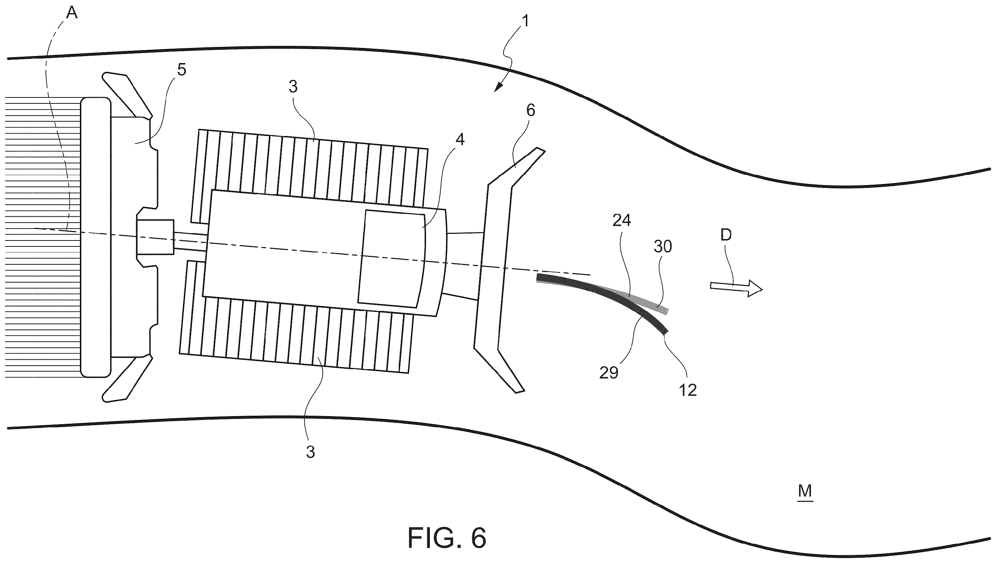

In use and with reference to Figure 6, the crawler vehicle 1 advances in the travelling direction D and the display device 9 projects the light beam so as to reproduce the visual indicator 12 and the visual indicator 24 on a portion of the surface to be worked M that is in front of the driver's cab 4.

In particular, the visual indicator 12 comprises a curved element 29 indicative of the reference trajectory to be travelled and the visual indicator 24 comprises a curved element 30 indicative of the trajectory currently travelled by the crawler vehicle 1 on the surface to be worked M.

From an operating point of view, the crawler vehicle 1 can be used in one or more of the following operating modes: a first fully autonomous operating mode, in which the control unit 8 calculates the reference position to be reached and/or the reference trajectory to be travelled and controls the crawler vehicle 1 so that it reaches said reference position and/or travels said reference trajectory; and a second partially assisted operating mode, in which the advancement of the crawler vehicle 1 is controlled by a driver assisted by the visual indicators 12 and 24 reproduced by the display devices 9, 10, 11.

It is evident that variants can be made to the present invention without, however, departing from the scope of protection of the appended claims.

## Claims

1. A crawler vehicle, preferably for preparing ski runs, the crawler vehicle (1) being configured to advance on a surface to be worked (M) in a travelling direction (D) and comprising:
- a frame (2) extending along a central axis (A) substantially parallel to the travelling direction (D);
- a pair of motorised tracks (3);
- a driver's cab (4) mounted on the frame (2);
- at least one working tool (5, 6), which is connected to the frame (2) and is configured to perform a processing of the surface to be worked (M) during the advancement of the crawler vehicle (1) on the surface to be worked (M);
- a position sensor (7) configured to detect a plurality of positions of the crawler vehicle (1) on the surface to be worked (M) during the advancement of the crawler vehicle (1) on the surface to be worked (M);
- a control unit (8), which is in communication with the position sensor (7) and is configured to reconstruct a trajectory travelled by the crawler vehicle (1) on the surface to be worked (M) as a function of the positions of the crawler vehicle (1) detected by the position sensor (7) and to calculate a reference position to be reached and/or a reference trajectory to be travelled as a function of the positions detected by the position sensor (7) and of the reconstructed travelled trajectory; and
- a display device (9, 10, 11), which is in communication with the control unit (8) and is configured to reproduce a first visual indicator (12) indicative of the calculated reference position and/or of the calculated reference trajectory.

2. The crawler vehicle as claimed in claim 1, wherein the display device (9, 10, 11) is configured to reproduce a second visual indicator (24) indicative of a current position of the crawler vehicle (1) on the surface to be worked (M) and/or of a trajectory currently travelled by the crawler vehicle (1) on the surface to be worked (M).

3. The crawler vehicle as claimed in claim 2, wherein the display device (9, 10, 11) is configured to reproduce the second visual indicator (24) aligned with the central axis (A) of the frame (2).

4. The crawler vehicle as claimed in claim 2 or 3, wherein the first visual indicator (12) and/or the second visual indicator (24) comprise respective first linear elements (25, 26) extending in a direction substantially parallel to the central axis (A) and/or respective second linear elements (27, 28) extending in a direction transverse to the central axis (A).

5. The crawler vehicle as claimed in any one of the foregoing claims, wherein the control unit (8) is configured to calculate the reference position to be reached and/or the reference trajectory to be travelled as a function of an overall dimension (L) of the at least one working tool (5, 6) on the surface to be worked (M) in a direction substantially transverse to the central axis (A).

6. The crawler vehicle as claimed in any one of the foregoing claims, and comprising a detection device (13), which is in communication with the control unit (8) and is configured to detect operating data comprising operating parameters of the crawler vehicle (1) and/or information on the operations to be performed and/or on the characteristics of the environment surrounding the crawler vehicle (1); the control unit (8) being configured to calculate the reference position to be reached and/or the reference trajectory to be travelled as a function of the operating data detected by the detection device (13).

7. The crawler vehicle as claimed in any one of the foregoing claims, wherein the display device (11) is arranged inside the driver's cab (4).

8. The crawler vehicle as claimed in claim 7, wherein the display device (11) comprises an interface screen (18) configured to display the first visual indicator (12) on the screen.

9. The crawler vehicle as claimed in any one of the foregoing claims, wherein the display device (9, 10) is configured to project the first visual indicator (12) onto the surface to be worked (M).

10. The crawler vehicle as claimed in claim 9, wherein the display device (9, 10) comprises a projector configured to project a light beam onto the surface to be worked (M) so as to reproduce the first visual indicator (12) on the surface to be worked (M).

11. A control method to control a crawler vehicle, the control method comprising the steps of:
- advancing the crawler vehicle (1) on a surface to be worked (M) in a travelling direction (D);
- performing a processing of the surface to be worked (M) by means of at least one working tool (5, 6) of the crawler vehicle (1) during the advancement of the crawler vehicle (1) on the surface to be worked (M);
- detecting a plurality of positions of the crawler vehicle (1) on the surface to be worked (M) during the advancement of the crawler vehicle (1) on the surface to be worked (M);
- reconstructing a trajectory travelled by the crawler vehicle (1) on the surface to be worked (M) as a function of the detected positions;
- calculating a reference position to be reached and/or a reference trajectory to be travelled as a function of the detected positions and of the reconstructed travelled trajectory; and
- reproducing a first visual indicator (12) indicative of the calculated reference position and/or of the calculated reference trajectory.

12. The control method as claimed in claim 11, and comprising the step of reproducing a second visual indicator (24) indicative of a current position of the crawler vehicle (1) on the surface to be worked (M) and/or of a trajectory currently travelled by the crawler vehicle (1) on the surface to be worked (M).

13. The control method as claimed in claim 11 or 12, and comprising the step of calculating the reference position to be reached and/or the reference trajectory to be travelled as a function of an overall dimension (L) of the at least one working tool (5, 6) on the surface to be worked (M) in a direction substantially transverse to the central axis (A).

14. The control method as claimed in any one of claims 11 to 13, and comprising the steps of detecting operating data comprising operating parameters of the crawler vehicle (1) and/or information on the operations to be performed and/or on the characteristics of the environment surrounding the crawler vehicle (1), and calculating the reference position to be reached and/or the reference trajectory to be travelled as a function of the detected operating data.

15. The control method as claimed in any one of claims 11 to 14, and comprising the steps of reproducing the first visual indicator (12) on an interface screen (18) arranged inside a driver's cab (4) of the crawler vehicle (1).

16. The control method as claimed in any one of claims 11 to 15, and comprising the step of projecting the first visual indicator (12) onto the surface to be worked (M).
